# FASCICULE DE BREVET EUROPEEN

(11) **EP 0 307 280 B1**
(45) Date de publication et mention de la délivrance du brevet: **29.09.1993**
(21) Numéro de dépôt: 88402178.3
(22) Date de dépôt: 30.08.1988
(51) Int. Cl.: B60J 1/17

(54) **Vitrage isolant pour automobile avec cordon absorbant l'humidité à surface d'échange accrue**
Kraftfahrzeugisolierverglasung mit einer vergrösserten Austauschoberfläche der feuchtigkeitsaufsaugenden Schnur
Motor car insulating glazing with an augmented exchange surface of the humidity absorbing cord

(30) Priorité: 31.08.1987 DE 3729036
(43) Date de publication de la demande: 15.03.1989
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Ohlenforst, Hans, D-5100 Aachen (DE); Peetz, Dieter, D-5100 Aachen (DE); Siemonsen, Hans-Peter, D-5100 Aachen (DE)
(74) Mandataire: Luziau, Nelly

(56) Documents cités:
- EP-A- 0 200 846
- DE-A- 3 517 581
- FR-A- 2 294 313
- FR-A- 2 294 314
- FR-A- 2 379 691

## Description

L'invention concerne un vitrage de véhicule et plus particulièrement, un vitrage de portière coulissant verticalement sous forme d'un vitrage isolant de faible épaisseur dans lequel deux feuilles de verre sont reliées par un cadre intercalaire constitué d'un cordon plastique contenant un matériau absorbant l'humidité.

Il est connu d'utiliser des vitrages isolants comme vitrages de véhicules. Les vitrages isolants prévus dans ce cas sont constitués en général de deux feuilles de verre relativement minces, d'une épaisseur de 2 à 3 mm de manière à ce que le poids du vitrage isolant reste limité. Par ailleurs, on souhaite, pour des raisons de "design" de la carrosserie automobile, ou de la baie vitrée, garder la lame d'air la plus mince possible entre les feuilles de verre. C'est pour ces raisons que la lame d'air elle-même a une épaisseur qui n'est que de 2 à 4 mm. Cela entraîne que le cadre intercalaire a lui aussi une section de cette épaisseur. Dans ces conditions, il n'est pas possible d'utiliser un cadre intercalaire fait d'un profilé métallique creux à l'intérieur duquel on peut introduire le matériau absorbant l'humidité, comme c'est l'usage avec les vitrages isolants qui possèdent une lame d'air plus épaisse. C'est pourquoi dans les vitrages isolants avec une lame d'air très mince, on utilise comme cadre intercalaire le long de la périphérie un cordon de plastique qui comprend le matériau absorbant l'humidité.

Des vitrages isolants destinés à des véhicules sont connus par exemple par le dépôt DE-A-35 17 581 A1. L'utilisation d'un cordon plastique auquel est incorporé le matériau absorbant l'humidité et qui constitue le cadre intercalaire de vitrages isolants est décrit en détail dans les brevets FR-A-2 294 313 et FR-A-2 294 314.

La concentration du matériau absorbant l'humidité dans le cordon plastique ne peut être augmentée indéfiniment. En effet, le cordon plastique doit pouvoir exercer sa fonction de collage, pour relier les deux feuilles de verre, et d'étanchéité, pour empêcher la pénétration d'humidité ou diminuer sa diffusion à travers le joint. Mais comme dans le cas de vitrages isolants très minces la section du cadre constitué du cordon plastique est très faible, la quantité globale du desséchant reste faible. Il existe alors un danger de voir la durée de vie de tels vitrages isolants limitée puisque le matériau desséchant disponible est lui aussi limité. Ce danger est particulièrement important dans le cas de vitrages automobiles car ceux-ci sont soumis à des pressions extérieures variables ce qui favorise les phénomènes de diffusion au travers de l'intercalaire et des colles.

L'invention a pour mission d'améliorer le vitrage isolant pour véhicule de telle manière que le danger de voir le matériau desséchant saturé diminue et qu'ainsi la durée de vie du vitrage isolant soit prolongée.

Conformément à l'invention cette mission est remplie par un vitrage de véhicule et plus particulièrement un vitrage de portière coulissant verticalement, sous forme d'un vitrage isolant de faible épaisseur dans lequel deux feuilles de verre sont reliées par un cadre intercalaire constitué d'au moins un cordon plastique contenant un matériau absorbant l'humidité, caractérisé en ce qu'est placé sur une partie de la périphérie du vitrage, particulièrement le long de son bord inférieur caché dans la portière, un cordon plastique comportant un matériau absorbant l'humidité et possédant un volume accru par rapport au volume de cordon utile pour la seule tenue mécanique et possédant une surface, en contact avec la lame d'air, au moins supérieure au double de la surface calculée par le produit de l'épaisseur de la lame d'air par la longueur de ladite partie de la périphérie sur laquelle est placé ledit cordon.

Selon une variante de l'invention, le cordon plastique placé le long du bord inférieur du vitrage comporte en plus du cordon de plastique servant d'intercalaire une bande de plastique plus mince que la lame d'air du vitrage isolant et constituant une fente qui permet la pénétration de la lame d'air du vitrage isolant.

Selon une autre variante de l'invention, le cordon plastique, possédant un volume accru, constitue partiellement ou totalement le cadre intercalaire du vitrage isolant et possède des dents orientées vers la lame d'air. Ce cordon est de préférence réalisé par dépôt d'un cordon plastique extrudé selon des méandres.

Des réalisation appropriées et d'autres développements de l'invention découlent de la description des différents exemples qui suivent illustrés par des dessins.

Les dessins montrent successivement :

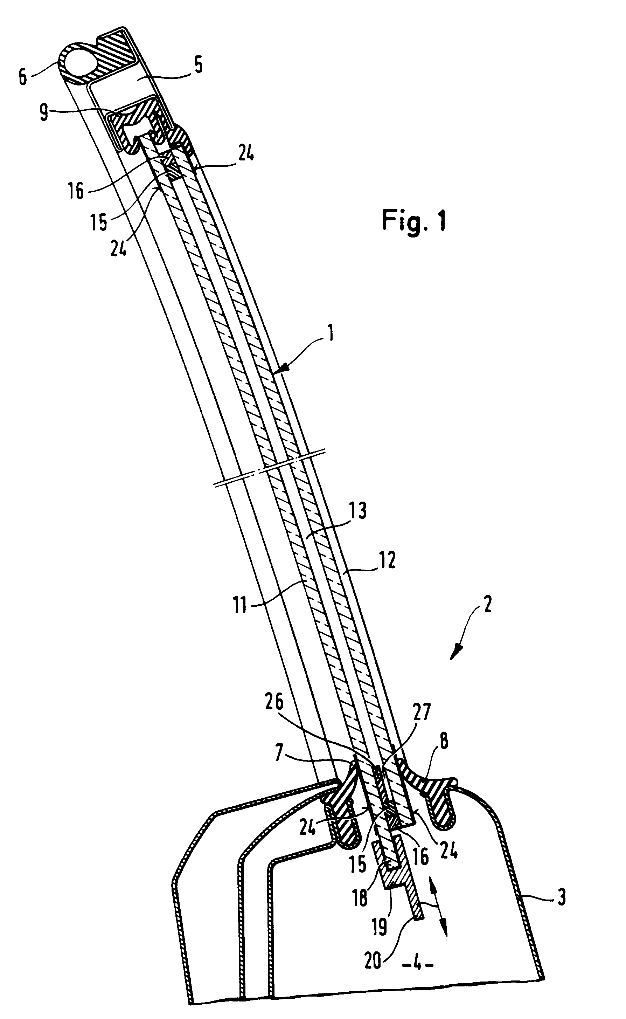

· figure 1 : une coupe verticale dans un vitrage latéral coulissant verticalement,
· figure 2 : une première forme de réalisation du vitrage isolant dans sa partie inférieure présentée en perspective, coupée et agrandie,
· **figure 3 :** une deuxième forme de réalisation du vitrage isolant dans sa partie inférieure dans une vue en perspective coupée et agrandie.

Le vitrage isolant 1 est représenté comme un vitrage latéral coulissant verticalement dans une portière de véhicule 2. La portière de véhicule 2 comprend le corps de portière 3 qui englobe le vide de portière 4 et, au-dessus de ce corps de portière l'encadrement de fenêtre 5. Le joint 6 placé le long de l'encadrement de fenêtre 5 isole celui-ci de la carrosserie. Les joints 7 et 8, placés dans le corps de portière 3 font l'étanchéité du vide de portière 4 en s'appuyant sur le vitrage de portière 1 et le joint 9 placé dans l'encadrement de fenêtre 5 sépare celui-ci du vitrage isolant 1.

Le vitrage isolant 1 est constitué des deux feuilles de verre 11 et 12 qui délimitent la lame 13. Les feuilles 11 et 12 ont une épaisseur d'environ 3 mm et sont constituées de verre de sécurité trempé. La lame d'air 13 a également une épaisseur d'environ 3 mm. La liaison des deux feuilles de verre 11 et 12 à leur périphérie est effectuée par un double système d'une part à l'aide d'un cordon plastique 15 jouant le rôle de cadre intercalaire avec une épaisseur d'environ 3 mm, et d'autre part, à l'extérieur de ce cordon 15 une masse d'étanchéité 16. Le cordon plastique 15 est constitué par exemple de caoutchouc butyl auquel on a mélangé environ 20% en poids de tamis moléculaire comme desséchant. La masse d'étanchéité 16 est avantageusement constituée de polysulfure.

Dans la forme de réalisation présentée, la feuille intérieure 11 du vitrage isolant 1 est plus grande que la feuille extérieure 12. On obtient ainsi un vitrage isolant décalé. Cette forme de réalisation permet d'obtenir une fenêtre de véhicule aérodynamique.

Sur le bord inférieur 18 de la feuille 11, on a monté de préférence par collage, un profilé métallique 19. Sur l'aile 20 du profilé métallique 19, on viendra fixer le mécanisme de manoeuvre pour monter ou descendre le vitrage isolant.

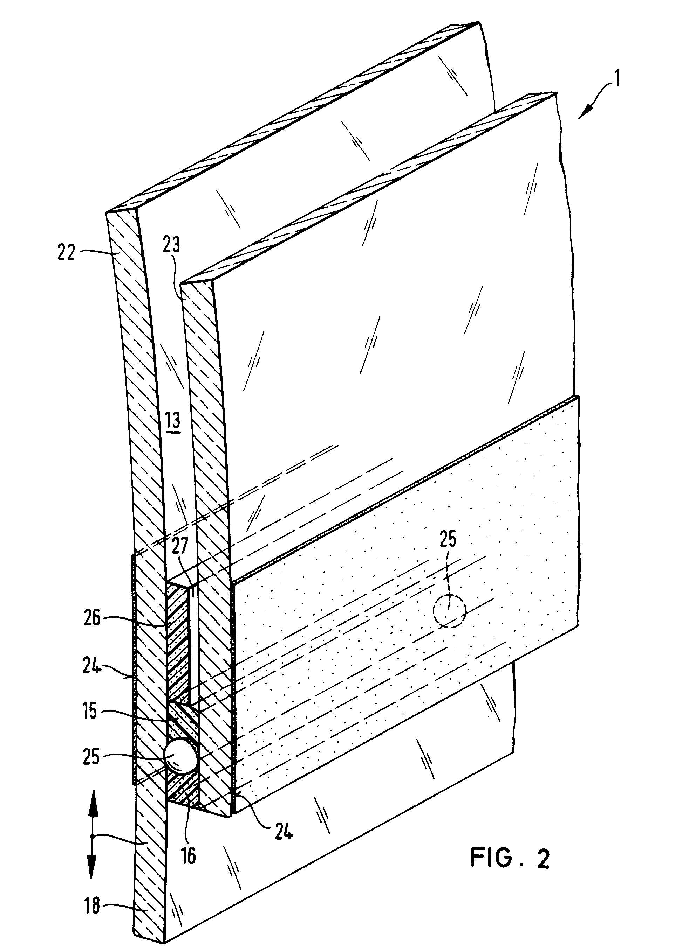

Un exemple de réalisation du vitrage isolant 1 dans sa partie inférieure est présenté figure 2. Les deux feuilles de verre 22 et 23 d'une épaisseur d'environ 3 mm qui constituent le vitrage isolant, sont séparées par une lame d'air 13. Elles sont équipées à leur périphérie à l'extérieur d'une couche 24, en forme de cadre, opaque à la lumière. Cette couche est destinée à protéger le cordon plastique 15 et la masse d'étanchéité 16 contre les rayons visibles et ultraviolets. Cette couche 24 est constituée avantageusement d'une peinture à chaud. Dans le cordon 15 on a introduit avec un espacement plus ou moins grand des noyaux 25 faits d'un matériau incompressible. Ces noyaux 25, qui peuvent par exemple être constitués de billes de diamètre 3 mm, ont pour fonction lorsque l'on presse le vitrage isolant après avoir déposé le cordon plastique 15 sur l'une des deux feuilles de verre, d'éviter un écrasement irrégulier du cordon sur toute la périphérie. Pour terminer, on a placé à côté du cordon plastique 15, sur la feuille 22, une bande 26 de 10 mm de large environ et d'une épaisseur de 2 mm environ. Cette bande 26 est également constituée d'un caoutchouc butyl auquel on a mélangé un desséchant. Il peut s'agir de la même matière que celle qui constitue le cordon plastique 15, mais il est également possible d'utiliser dans ce but une composition plastique dans laquelle on a introduit plus de desséchant que dans le cordon 15. Etant donné que la bande 26 est plus mince que la lame d'air 13, il existe entre la bande 26 et la feuille 23 une fente 27 de telle sorte que la bande 26 possède une surface active absorbant l'humidité accrue.

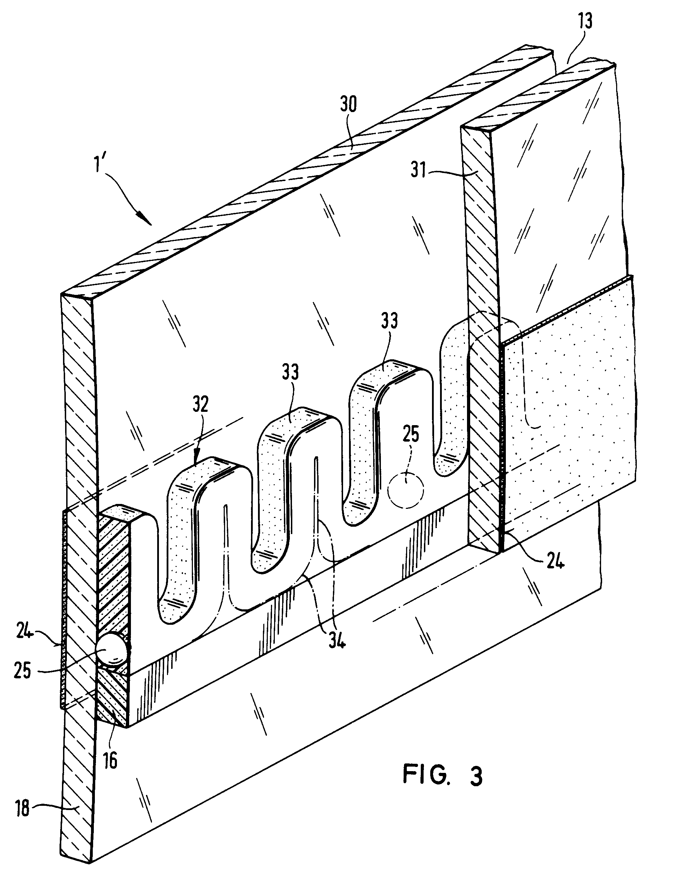

Sur la figure 3 également, a été représenté un mode de réalisation dans lequel les deux feuilles de verre 30 et 31 du vitrage isolant 1 sont équipées à leur périphérie d'une couche 26 en forme de cadre constituée d'un émail à chaud. Ici, le cordon plastique 32 qui contient le desséchant constitue un profilé dentelé dans lequel les dents 33 sont orientées vers la lame d'air 13. La hauteur de ces dents 33 est de l'ordre de 10 mm. On a ici aussi introduit dans le profilé dentelé 32 des billes 25 constituées d'un matériau incompressible, celles-ci garantissent un écart constant entre les deux feuilles unitaires. En plus du profilé dentelé 32, on a ici également prévu une masse d'étanchéité 16 par exemple en polysulfure.

Le profilé dentelé 32 peut être constitué d'un profilé préformé, et dans ce cas on le posera sur l'une des deux feuilles de verre. Mais l'on peut avantageusement déposer simplement le cordon plastique sur une des feuilles à l'aide d'une tête d'extrusion qui pose sur le verre à la périphérie, un cordon en forme de méandres 34. On obtient ainsi la configuration représentée sur la figure ou une configuration voisine.

## Revendications

1. Vitrage (1) de véhicule et plus particulièrement vitrage de portière coulissant verticalement, sous forme d'un vitrage isolant de faible épaisseur dans lequel deux feuilles de verre sont reliées par un cadre intercalaire constitué d'au moins un cordon plastique (15, 26, 32) contenant un matériau absorbant l'humidité, caractérisé en ce qu'est placé sur une partie de la périphérie du vitrage, particulièrement le long de son bord inférieur caché dans la portière, un cordon plastique (15, 26, 32) comportant un matériau absorbant l'humidité et possédant un volume accru par rapport au volume de cordon utile pour la seule tenue mécanique et possédant une surface, en contact avec la lame d'air, au moins supérieure au double de la surface calculée par le produit de l'épaisseur de la lame d'air (13) par la longueur de ladite partie de la périphérie du vitrage sur laquelle est placé ledit cordon.

2. Vitrage de véhicule selon la revendication 1, caractérisé en ce que le cordon plastique placé le long du bord inférieur du vitrage, comporte en plus du cordon de plastique (15) servant d'intercalaire une bande de plastique (26) plus mince que la lame d'air (13) du vitrage isolant et constituant une fente (27) qui permet la pénétration de l'air du vitrage isolant.

3. Vitrage de véhicule selon la revendication 1, caractérisé en ce que le cordon plastique possédant un volume accru constitue partiellement ou totalement le cadre intercalaire du vitrage isolant et possède des dents (33) orientées vers la lame d'air (13).

4. Vitrage de véhicule selon la revendication 3, caractérisé en ce que le cordon plastique constituant partiellement ou totalement le cadre intercalaire du vitrage isolant et possédant des dents (33) orientées vers la lame d'air (13) est réalisé par dépôt d'un cordon plastique extrudé selon des méandres (34).

## Claims

1. Pane (1) for vehicle, and more especially vertically sliding window pane for vehicle door, in the form of an insulating pane of small thickness, in which two glass sheets are connected together by an intermediate frame composed of at least one plastics cord (15, 26, 32) containing a moisture-absorbent material, characterized in that there is positioned, over a portion of the periphery of the pane, especially along its lower edge concealed within the door, a plastics cord (15, 26, 32) comprising a moisture-absorbent material and possessing a larger volume than the volume of the cord required solely for mechanical sealing and having a surface area, in contact with the layer of air, at least greater than twice the surface area calculated by the product of the thickness of the air layer (13) times the length of said portion of the periphery of the pane along which said cord is placed.

2. Vehicle pane according to Claim 1, characterized in that the plastics cord placed along the lower edge of the pane comprises, in addition to the plastics cord (15) serving as spacer, a plastics strip (26) thinner than the air layer (13) of the insulating pane and forming a slot (27) which allows penetration of the air of the insulating pane.

3. Vehicle pane according to Claim 1, characterized in that the plastics cord having a greater volume constitutes, partially or totally, the intermediate frame of the insulating pane and has teeth (33) orientated towards the air layer (13).

4. Vehicle pane according to Claim 3, characterized in that the plastics cord constituting, partly or totally, the intermediate frame of the insulating pane and having teeth (33) orientated towards the air layer (13), is formed by depositing an extruded plastics cord along meanders (34).

## Patentansprüche

1. Autoglasscheibe (1), insbesondere höhenverstellbare Türfensterscheibe, aus einem Isolierglas geringer Dicke, bei der zwei Glasscheiben durch einen Zwischenrahmen aus wenigstens einem ein feuchtigkeitsabsorbierendes Mittel enthaltenden Kunststoffstrang (15,26,32) miteinander verbunden sind, **dadurch gekennzeichnet,** daß auf einem Teil des Scheibenumfangs, insbesondere entlang ihres unteren, im Türschacht verborgenen Randbereichs, ein ein feuchtigkeitsabsorbierendes Material enthaltender Kunststoffstrang (15,26,32) angeordnet ist, dessen Volumen bezogen auf das allein für das mechanische Verhalten notwendige Volumen vergrößert ist, und dessen in Kontakt mit dem Luftzwischenraum stehende Oberfläche mindestens doppelt so groß ist wie die Oberfläche, die sich aus dem Produkt der Dickenabmessung des Luftzwischenraums (13) und der Länge des Teils des Scheibenumfangs ergibt, auf dem der Kunststoffstrang angeordnet ist.

2. Autoglasscheibe nach Anspruch 1, dadurch gekennzeichnet, daß der entlang des unteren Randbereichs der Glasscheibe angeordnete Kunststoffstrang außer dem als Zwischenkörper dienenden Kunststoffstrang (15) einen im Vergleich zum Luftzwischenraum (13) des Isolierglases dünneren Kunststoffstrang umfaßt, der einen Spalt (27) für den Eintritt der Luft des Isolierglases bildet.

3. Autoglasscheibe nach Anspruch 1, dadurch gekennzeichnet, daß der Kunststoffstrang mit vergrößertem Volumen ganz oder teilweise den Zwischenrahmen der Isolierglasscheibe bildet und gegen den Luftzwischenraum (13) gerichtete Zähne (33) besitzt.

4. Autoglasscheibe nach Anspruch 3, dadurch gekennzeichnet, daß der Kunststoffstrang, der ganz oder teilweise den Zwischenrahmen der Isolierglasscheibe bildet und gegen den Luftzwischenraum (13) gerichtete Zähne (33) aufweist, durch Ablage eines in Mäanderform (34) extrudierten Kunststoffstrangs hergestellt ist.
